# EUROPEAN PATENT APPLICATION

(11) **EP 4 837 697 A1**
(43) Date of publication of application: **11.11.2026**
(21) Application number: 25809731.0
(22) Date of filing: 25.04.2025
(51) Int. Cl.: B24B 27/00, B24B 47/20, B24B 49/02, B24B 49/12, B24D 3/22, B25J 13/00

(54) **GRINDING METHOD, GRINDING DEVICE, AND METHOD FOR MANUFACTURING METAL PRODUCT**

(30) Priority: 07.05.2024 JP 2024075429
(71) Applicant: JFE Steel Corporation, Tokyo 100-0011 (JP)
(72) Inventor: MAKITA Haruyuki, Tokyo 100-0011 (JP); WATANABE Taku, Tokyo 100-0011 (JP); SUMIYA Takuma, Tokyo 100-0011 (JP)
(74) Representative: Haseltine Lake Kempner LLP
(86) International application number: PCT/JP2025/016097
(87) International publication number: WO 2025/234348

(57) **Abstract**

When grinding the surface of a material to be ground, the occurrence of finished surface flaws is suppressed, and a smooth finished surface is obtained. A grinding method for grinding a surface of a material to be ground includes a first grinding process of grinding the surface of the material to be ground along a first direction of the surface of the material to be ground, and a second grinding process of grinding the surface of the material to be ground along a second direction intersecting the first direction after the first grinding process.

## Description

### TECHNICAL FIELD

The present disclosure relates to a grinding method, a grinding device, and a method of producing a metal product, and more particularly to a grinding method and a grinding device for grinding and removing flaws present on the surface of a metal material, serving as a material to be ground, to obtain a smooth finished surface, and to a method of producing a metal product using the grinding device.

### BACKGROUND

Grinding work for removing flaws from metal materials such as steel materials using a grinding device such as a grinder is hazardous work involving exposure to vibration, noise, dust, and the like, making it difficult to secure workers. Labor saving and automation are therefore desired.

Here, as a technique for automating grinding work, Patent Literature (PTL) 1, for example, discloses a technique that uses sensors to recognize the surface shape of a three-dimensional steel material and the location of flaws and that automatically grinds a target area using a grinding member attached to an arm robot.

### CITATION LIST

### Patent Literature

PTL 1: WO 2022/079974 A1

### SUMMARY

### (Technical Problem)

In PTL 1, grinding is performed on the surface of a steel material by pressing a grinding stone against the surface while moving the grinding stone along a fixed grinding direction and repeating this grinding a plurality of times at predetermined intervals provided in a direction orthogonal to the grinding direction. However, when the surface of a steel material is continuously ground along a fixed grinding direction in this way, a step extending in the grinding direction is likely to occur at the boundary between the ground surfaces formed by successive grinding operations, making it difficult to obtain a smooth finished surface.

In view of these facts, it is an object of the present disclosure to provide a grinding method and a grinding device that can suppress the occurrence of finished surface flaws and obtain a smooth finished surface when grinding the surface of a material to be ground, and a method of producing a metal product using the grinding device.

### (Solution to Problem)

The present disclosure was completed to address the aforementioned issues, and primary features thereof are described below.
1. A grinding method for grinding a surface of a material to be ground, the grinding method comprising:
   a first grinding process of grinding the surface of the material to be ground along a first direction of the surface of the material to be ground; and
   a second grinding process of grinding the surface of the material to be ground along a second direction intersecting the first direction after the first grinding process.
2. The grinding method according to 1, wherein in the second grinding process, the surface of the material to be ground is ground using an elastic grinding wheel.
3. The grinding method according to 2, wherein in the second grinding process, the surface of the material to be ground is ground so that a contact surface area between a working surface of the elastic grinding wheel and the surface of the material to be ground is 30 % or more of an area of the working surface.
4. The grinding method according to any one of 1 to 3, further comprising a measurement process and a second grinding condition determination process, wherein
   in the measurement process, a shape of the surface of the material to be ground after the first grinding process is measured, and
   in the second grinding condition determination process, grinding conditions for the second grinding process are determined based on the measured shape.
5. A grinding device for grinding a surface of a material to be ground, the grinding device comprising:
   a first grinding member, a second grinding member, a transporter configured to move the first grinding member and the second grinding member relative to the surface of the material to be ground, and a controller configured to control the transporter, wherein
   the controller is configured to control the first grinding member to move along a first direction of the surface of the material to be ground and control the second grinding member to move along a second direction intersecting the first direction.
6. The grinding device according to 5, wherein the transporter is a single robot arm.
7. A method of producing a metal product, comprising grinding a surface of a metal material as a material to be ground using the grinding device according to 5 or 6.

### (Advantageous Effect)

According to the grinding method, grinding device, and method of producing a metal product using the grinding device of the present disclosure, grinding work on the surface of materials to be ground having various shapes and properties can be automated while suppressing the occurrence of finished surface flaws such as insufficient grinding and stepped surfaces, thereby obtaining a smooth finished surface.

### BRIEF DESCRIPTION OF THE DRAWINGS

In the accompanying drawings:
FIG. 1 is a schematic diagram illustrating the overall configuration of a grinding device in an embodiment of the present disclosure;
FIG. 2 is a schematic diagram illustrating a state of grinding in a first grinding process;
FIG. 3 is a schematic diagram illustrating a state of grinding in a second grinding process;
FIG. 4 is a schematic diagram of grinding using an elastic grinding wheel; and
FIG. 5 is a schematic diagram of a working surface of a second grinding member.

### DETAILED DESCRIPTION

Hereinafter, embodiments of the grinding method, grinding device, and method of producing a metal product using the grinding device of the present disclosure will be described in detail with reference to the drawings.

### [Material to be ground]

The present disclosure is for grinding the surface of a material to be ground. Examples of materials to be ground include metal materials. The metal material can be any metal material. The material properties of the aforementioned metal material are not limited. The metal material may, for example, be a steel material.

The shape of the material to be ground is not particularly limited and can be any shape, such as a plate, cylinder, or columnar shape. Furthermore, the shape of the surface of the material to be ground is not limited and can be flat or curved. In other words, the present disclosure can be applied to both grinding flat surfaces and grinding curved surfaces.

In the following examples, the case of grinding the surface of a metal material is mainly described, but in the grinding device and grinding method of the present disclosure, the material to be ground is not limited to metal materials.

### [Grinding device]

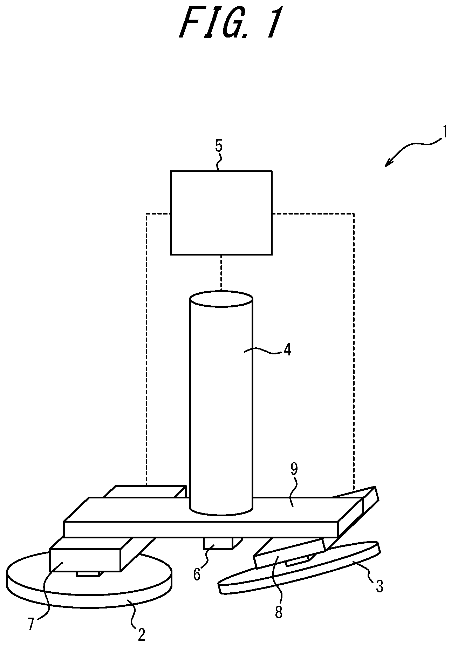

First, the grinding device according to the present disclosure is described. FIG. 1 illustrates the overall configuration of a grinding device 1 for grinding the surface of a metal material as an example. The grinding device 1 includes a first grinding wheel 2, a second grinding wheel 3, a robot arm 4, and a controller 5.

The first grinding wheel 2, which serves as a first grinding member, and the second grinding wheel 3, which serves as a second grinding member, perform grinding by being pressed against the surface of the metal material. In the present disclosure, the first grinding member and the second grinding member are not limited to grinding wheels and may be any member capable of grinding the surface of a metal material. Furthermore, the shapes of the first and second grinding members are not limited, but a circular shape or a circular shape with a hole in the center is preferred.

The first grinding wheel 2 is a grinding wheel other than an elastic grinding wheel. In the present disclosure, the first grinding member is preferably a grinding wheel other than an elastic grinding wheel from the perspective of efficiently grinding and removing flaws in the metal material. Furthermore, the second grinding wheel 3 is an elastic grinding wheel. In the present disclosure, the second grinding member is preferably an elastic grinding wheel from the perspective of preventing insufficient grinding while eliminating finished surface flaws such as stepped surfaces. The material properties of the first grinding member and the second grinding member are not limited in the present disclosure.

Here, an elastic grinding wheel refers to a grinding wheel that has elasticity. For example, a grinding wheel in which abrasive grains are held in an elastic body can be used. For example, rubber, resin, or the like can be used as the elastic body. In other words, the second grinding member may have abrasive grains held in rubber or resin.

The grit sizes of the abrasive grains in the first grinding member and second grinding member are not particularly limited, but the first grinding member is preferably #14 to #36, and the second grinding member is preferably #36 to #60. Here, from the perspective of obtaining an even smoother finished surface, the second grinding member preferably has a finer grit size than the first grinding member.

The first grinding wheel 2 and the second grinding wheel 3 are respectively provided so as to be inclined toward a front side and a right side in FIG. 1. In the present disclosure, the installation angles of the first grinding member and the second grinding member are not limited, but the first grinding member and the second grinding member are preferably provided at different angles from each other so that the working surface of one grinding wheel does not face the other grinding wheel. Accordingly, interference with the other grinding member can be avoided when grinding is performed using one of the grinding members, making this configuration particularly suitable when both grinding members are mounted on the same robot arm.

The first grinding wheel 2 and the second grinding wheel 3 are detachably mounted on the grinders 7, 8 and are rotatable with respect to the rotation axes of the grinders. Thus, in the present disclosure, the grinding device preferably includes a first rotating device for rotating the first grinding member and a second rotating device for rotating the second grinding member. The grinder is an example of a rotating device. A rotating device is not required, and it suffices for the grinding device 1 to be configured to grind the surface of a metal material using the first grinding member and the second grinding member.

The robot arm 4, which serves as a transporter, has the first grinding wheel 2 and the second grinding wheel 3 at its tip via the grinders 7 and 8 and a support member 9. The robot arm 4 moves the first grinding wheel 2 and the second grinding wheel 3 relative to the surface of the metal material. The transporter is not limited to a robot arm and can be any means that moves the first grinding wheel 2 and the second grinding wheel 3 relative to the surface of the metal material. For example, a Cartesian robot, a SCARA robot, or the like may be used. Furthermore, the first grinding member and the second grinding member are not limited in terms of arrangement and need not be provided via a support member. The first grinding member and the second grinding member may be mounted on separate robot arms. In other words, the transporter may be a first robot arm that moves the first grinding member and a second robot arm that moves the second grinding member. However, from the perspective of improving work efficiency, the first grinding member and the second grinding member are preferably mounted on a single robot arm. That is, the transporter is preferably a single robot arm.

The controller 5 controls the robot arm 4. Then, by moving the first grinding wheel 2 along the first direction of the surface of the metal material, the surface of the metal material can be ground in the first direction. Furthermore, by moving the second grinding wheel 3 along a second direction intersecting the first direction, the surface of the metal material can be ground in the second direction. In the present disclosure, the controller is configured to perform a first grinding process, described later, using the first grinding member and to perform a second grinding process, described later, using the second grinding member. In other words, the controller is configured to move the first grinding member along the first direction and move the second grinding member along the second direction. A preferred embodiment of the controller may be the same as preferred embodiments in the first grinding process and the second grinding process described below.

Furthermore, the controller 5 controls the grinders 7, 8 in addition to the robot arm 4. In other words, when a first rotating device and a second rotating device are provided, the controller preferably further controls the first rotating device and the second rotating device. In this case, the first grinding member is preferably controlled to move along the first direction while rotating, and the second grinding member is preferably controlled to move along the second direction while rotating.

The controller may include, for example, a processor, a storage, an input interface, and an output interface. These components do not need to be provided integrally and may be provided separately. The controller may also be configured by a transport controller for controlling the transporter and a rotation controller for controlling the rotating device. Furthermore, control may be wireless or wired.

The grinding device 1 includes a laser rangefinder 6, which serves as a surface shape measuring device, and measures the surface of the metal material before grinding, after grinding, or both. A surface shape measuring device is not required, but the grinding device preferably includes a surface shape measuring device to perform the measurement process described below. Furthermore, the transporter preferably includes the surface shape measuring device in a movable manner. In addition to a laser rangefinder, the surface shape measuring device can also use a 3D camera, for example.

### [Grinding method]

The grinding method performed by the grinding device according to the present embodiment will be described below. A grinding method according to an embodiment of the present disclosure includes a first grinding process and a second grinding process. In the first grinding process, the surface of the metal material is ground along a first direction of the surface. The second grinding process is a process, after the first grinding process, in which the surface of the metal material is ground along a second direction intersecting the first direction.

The above-described grinding device 1 is based on the premise that different grinding members are used as grinding members in the first grinding process and the second grinding process. However, the present disclosure is not limited to cases in which different grinding members are used in the first grinding process and the second grinding process, and the first grinding member may also serve as the second grinding member.

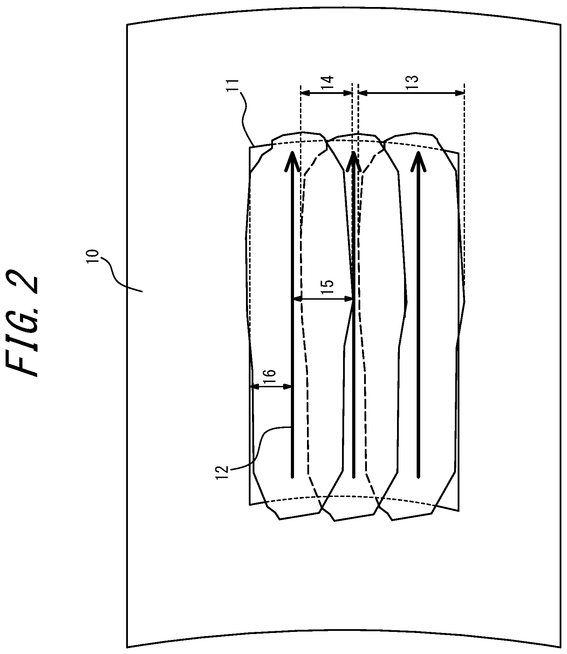

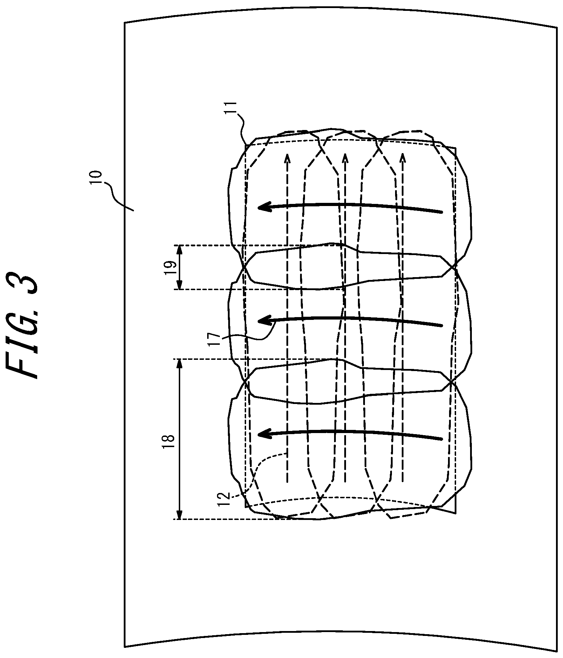

FIGS. 2 and 3 schematically illustrate an example of a grinding method according to an embodiment of the present disclosure. FIG. 2 schematically illustrates the state of grinding of a grinding range 11 on the surface 10 of the metal material during the first grinding process. FIG. 3 schematically illustrates the state of grinding of the grinding range 11 during the second grinding process. In the examples illustrated in FIGS. 2 and 3, flaws present in the grinding range 11 are removed by grinding.

### [First grinding process]

In the example illustrated in FIG. 2, in the first grinding process, the first direction is set to movement from left to right, as indicated by the grinding trajectory 12, and the grinding range 11 is ground along this first direction. In FIG. 2, the grinding trajectory 12 consists of three strokes, and one stroke can grind a range with a grinding width 13 in the vertical direction. Furthermore, the ranges ground by each stroke overlap by a predetermined overlap width 14. The grinding trajectory in the first grinding process and the below-described second grinding process usually consists of a plurality of strokes.

The first direction is one direction on the surface of the metal material and can be selected according to the shape of the surface of the metal material. When the surface of the metal material is flat, the first direction may be parallel to the surface of the metal material. As illustrated in FIG. 2, when the surface is curved in one direction, the direction in which the surface is not curved is preferably set as the first direction. For example, if the surface is the inner or outer surface of a cylinder, or the surface of a column, the longitudinal direction is preferably the first direction.

FIG. 2 illustrates an interval 15, an offset amount 16, and the overlap width 14 for each stroke in a direction orthogonal to the first direction. Furthermore, from the perspective of preventing insufficient grinding, it is preferable to determine the grinding trajectory by determining in advance, based on the width in the direction orthogonal to the first direction of the grinding range and the predicted value of the grinding width, the interval and offset amount in the direction orthogonal to the first direction so that the entire grinding range can be ground. The presence or absence of overlap in the range ground by each stroke can also be selected as appropriate. However, from the perspective of further preventing insufficient grinding, the grinding trajectory is preferably determined in advance so that the ranges ground by each stroke overlap. At this time, the overlap width can be determined to be between 40 % and 60 % of the grinding width, for example. The grinding method according to the present disclosure thus preferably includes a first grinding condition determination process, in which the grinding trajectory in the first grinding process can be determined. Furthermore, the grinding trajectory is more preferably determined based on the grinding range and the predicted grinding width of the surface of the metal material. The method of predicting the grinding width is not limited, but prediction can be made in advance based on the type of the first grinding member, grinding conditions other than the grinding trajectory, past operating conditions, and the like. In the present disclosure, the grinding trajectory does not necessarily have to be determined in advance.

### [Second grinding process]

In the example of the second grinding process illustrated in FIG. 3, after performing the grinding illustrated in FIG. 2, the grinding range 11 is ground along a grinding trajectory 17 determined along a second direction orthogonal to the first direction. In FIG. 3, the grinding trajectory 17 consists of three strokes, and one stroke can grind a range with a grinding width 18 in the left-right direction. Furthermore, the ranges ground by each stroke overlap with a predetermined overlap width 19. In the second grinding process, the predetermined overlap width is, for example, approximately 30 % of the grinding width.

The second direction is one direction on the surface of the metal material. Furthermore, in the present disclosure, it is important that the first direction and the second direction intersect. If only the first grinding process is performed, a step extending in the first direction is likely to occur. However, by performing grinding along the second direction that intersects the first direction, the occurrence of steps on the ground surface can be suppressed. Furthermore, performing grinding a plurality of times in intersecting directions can suppress insufficient grinding. Therefore, according to the present disclosure, a smooth finished surface can be obtained.

The angle at which the second direction intersects the first direction is not particularly limited, but from the perspective of obtaining a smoother finished surface, the angle of intersection is preferably from 5° to 175°. The angle of intersection is more preferably from 85° to 95°. Furthermore, it is even more preferable that the second direction and the first direction are orthogonal to each other. For example, if the surface is the inner surface or outer surface of a cylinder, or the surface of a column, a direction orthogonal to the longitudinal direction, i.e., the circumferential direction, is more preferably the second direction.

For the same reasons as in the first grinding process, the grinding method according to the present disclosure preferably includes a second grinding condition determination process, in which the grinding trajectory in the second grinding process can be determined. Furthermore, the grinding trajectory is more preferably determined based on the grinding range and the predicted grinding width of the surface of the metal material. The method of predicting the grinding width is not limited, but prediction can be made in advance based on the type of the second grinding member, grinding conditions other than the grinding trajectory, past operating conditions, and the like. Furthermore, the grinding trajectory is more preferably predetermined so that the ranges ground by each stroke overlap. At this time, the overlap width can be determined to be between 20 % and 40 % of the grinding width, for example.

In the present embodiment, it is preferable to perform rough grinding on the surface of the metal material in the first grinding process and finish grinding on the surface of the metal material in the second grinding process. In rough grinding (main grinding), grinding is performed within a predetermined grinding range and grinding depth to remove any flaws present in the grinding range. On the other hand, in finish grinding, grinding is preferably performed over a wider grinding range and to a shallower grinding depth than in rough grinding in order to eliminate finished surface flaws, such as stepped surfaces, caused by rough grinding. In other words, the grinding range in the second grinding process is preferably wider than the grinding range in the first grinding process, and the grinding depth in the second grinding process is preferably shallower than the grinding depth in the first grinding process. To change the grinding range, grinding depth, or the like, it suffices to change the material properties of the grinding member, the contact angle, the contact pressure, the feed rate, or the like between the first grinding process and the second grinding process, for example. In this way, by changing the grinding method between the first grinding process and the second grinding process, finished surface flaws, such as steps, on the surface of the metal material can be further suppressed. When the first grinding member and the second grinding member have different material properties, the second grinding member is preferably an elastic grinding wheel, as described above. Furthermore, since rough grinding is performed in the first grinding process and finish grinding is performed in the second grinding process, the grinding width in the second grinding process is preferably wider than the grinding width in the first grinding process. From the perspective of further suppressing unevenness in the grinding amount during rough grinding, the overlap width in the first grinding process is preferably wider than the overlap width in the second grinding process.

### (Contact surface area)

In the present disclosure, the contact surface area between the working surface of the second grinding member and the surface of the metal material is preferably increased. Specifically, the contact surface area is preferably 30 % or more of the area of the working surface of the second grinding member.

In addition, to achieve the aforementioned contact surface area in the present disclosure, an elastic grinding wheel is preferably used as the second grinding member. For similar reasons, the controller also preferably sets the tool center point (TCP) of the transporter to a position inward from the tip of the second grinding member. Furthermore, for similar reasons, the controller preferably controls the contact angle between the second grinding member and the surface of the metal material.

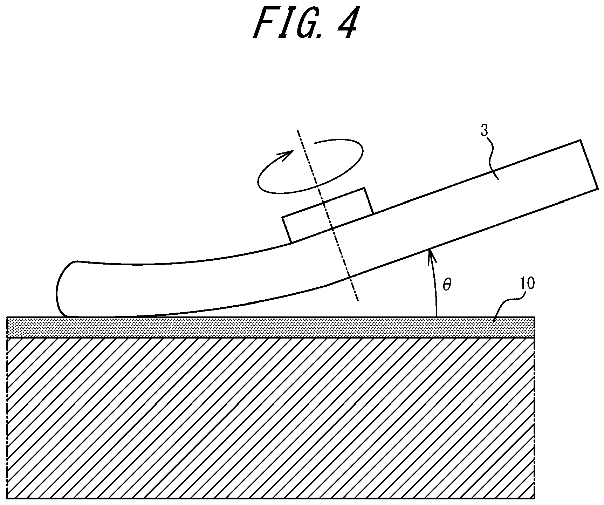

Details are provided below with reference to the drawings. In an embodiment of the present disclosure, the second grinding wheel 3 is an elastic grinding wheel. Therefore, as illustrated in FIG. 4, when the lower surface, which is the working surface of the second grinding wheel 3, is pressed against the surface 10 of the metal material, the second grinding wheel 3 bends, and the lower surface deforms to conform to the shape of the surface 10 of the metal material. Based on the above, in the second grinding process, the robot arm 4 is controlled so that the contact surface area between the working surface of the second grinding wheel 3 and the surface 10 of the metal material is increased. Specifically, the contact angle θ of the second grinding wheel 3 with the metal material and the TCP of the robot arm 4 are set.

The contact surface area between the second grinding wheel 3 and the surface 10 of the metal material changes depending on the contact angle between the second grinding wheel 3 and the surface 10. In other words, as the contact angle θ illustrated in FIG. 4 increases, the contact surface area decreases, and as the contact angle θ decreases, the contact surface area increases. Therefore, a smaller contact angle θ is preferable.

Furthermore, the contact surface area between the second grinding wheel 3 and the surface 10 of the metal material also changes depending on the TCP setting of the robot arm 4. The TCP is a control point for moving a robot arm, and when using a robot arm to move a grinding member, the TCP is usually set at the tip of the grinding member.

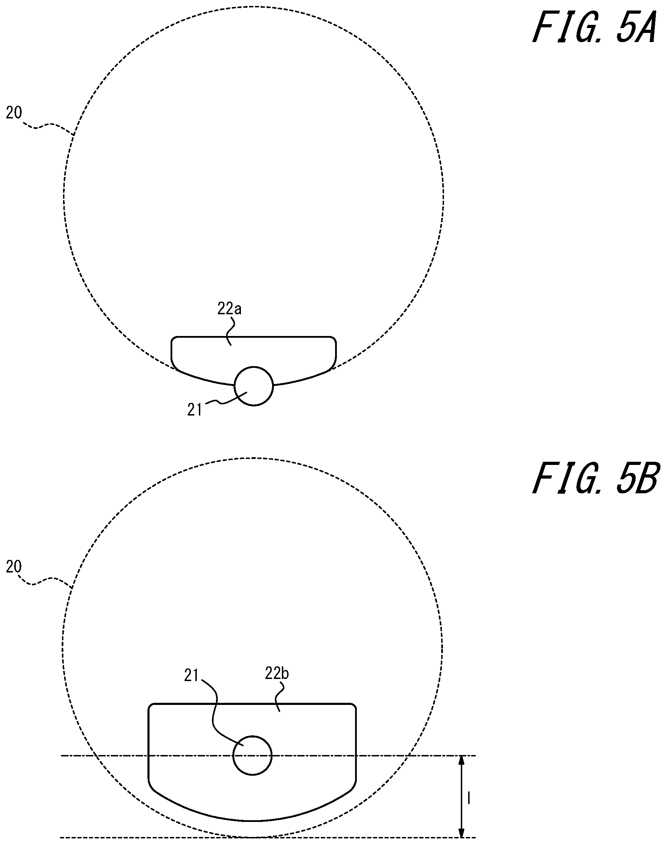

FIGS. 5A and 5B schematically illustrate a working surface 20 of the second grinding member. FIG. 5A illustrates a contact surface 22a when a TCP 21 is set at the tip of the second grinding wheel 3. Even when the TCP 21 is at the tip, by pressing the second grinding wheel 3 against the metal material and bending the second grinding wheel 3, the area of the working surface 20 of the second grinding wheel 3 indicated by the contact surface 22a comes into contact with the surface of the metal material.

On the other hand, FIG. 5B illustrates the contact surface 22b when TCP 21 is set at a position offset radially inward by a distance l from the tip of the second grinding wheel 3. The area of the contact surface 22b is larger than that of the contact surface 22a. Thus, it can be seen that setting the TCP 21 on the radially inner side of the second grinding wheel 3 increases the contact surface area compared to when the TCP 21 is set at the tip.

Table 1 illustrates the relationship between distance l, contact surface area, and grinding width in an embodiment of the present disclosure. In Table 1, the contact surface area is illustrated as a percentage of the area of the working surface of the second grinding wheel 3.

### [Table 1]

**Table 1**

| Distance l (mm) | Contact surface area/area of working surface (%) | Grinding width (mm) |
|---|---|---|
| 0 | 21.0 | 60 |
| 10 | 52.5 | 70 |
| 20 | 69.1 | 75 |
| 30 | 48.1 | 72 |
| 40 | 37.0 | 62 |
| 50 | 22.4 | 55 |

As illustrated in Table 1, when the TCP of the second grinding wheel 3 is offset towards the radially inner side from the tip, the grinding width and contact surface area gradually increase, but after peaking at a certain point, the grinding width and contact area gradually decrease. This is thought to be because if the TCP is offset too far towards the radially inner side of the second grinding wheel 3, the tip of the second grinding wheel 3 will be lifted too far from the surface of the metal material. In an embodiment of the present disclosure, by setting the TCP at a position 10 mm to 40 mm towards the radially inner side of the tip of the second grinding wheel 3 (l = 10 mm to 40 mm), the contact surface area can be made 30 % or more of the area of the working surface of the second grinding member. Furthermore, by setting the TCP at a position 20 mm from the tip of the second grinding wheel 3 (l = 20 mm), the contact surface area can be maximized.

In addition, by increasing the contact surface area between the second grinding wheel 3, which serves as the second grinding member, and the metal material, the grinding width can be increased. The grinding time can therefore be reduced. A larger contact surface area also results in a gentler grinding surface shape, allowing for a smoother finished surface. Furthermore, compared to using only a portion of the working surface for grinding, the service life of the second grinding member can be improved.

The TCP 21 and the contact angle θ are therefore preferably determined so that the contact surface area is as large as possible. In particular, at least 30 % or more of the working surface area of the second grinding wheel 3 is preferably in contact with the surface 10 of the metal material. There is no particular upper limit on the contact surface area relative to the surface area of the working surface, and the upper limit may be 100 %.

The working surface is the surface of the grinding member that comes into contact with the surface of the metal material to perform grinding and is usually the underside of the grinding member. When the grinding member is a circle with diameter D, the area of the working surface is expressed as the area of the circle with diameter D, regardless of the hole in the center.

The specific TCP and contact angle are determined as appropriate depending on the material properties and elasticity of the second grinding member. However, to achieve the above-described contact surface area, the TCP is preferably set inward from the tip of the second grinding member. Furthermore, the contact angle is preferably set to 30° or less, for example.

### (Measurement of surface shape)

The present disclosure preferably further includes a measurement process and a second grinding condition determination process. In the measurement process, the shape of the surface of the metal material after the first grinding process is measured, and in the second grinding condition determination process, grinding conditions for the second grinding process are determined based on the measured shape. In other words, the metal material grinding device preferably further includes a surface shape measuring device, and the controller preferably determines the conditions for grinding using the second grinding member based on the shape of the surface of the metal material measured by the surface shape measuring device.

As an example, after the first grinding process, the shape of the surface of the metal material is measured by a laser rangefinder 6 provided in the grinding device 1. The presence and size of any steps on the surface are then calculated from the measurement results of the laser rangefinder 6, and the conditions for grinding (such as the grinding amount) by the second grinding wheel 3 are determined according to the calculation results. In this way, by reflecting the grinding results from the first grinding process in the conditions of the second grinding process, a smoother finished surface can be obtained.

At this time, the profile is preferably measured in both the first direction and second direction during the measurement process. Therefore, in the measurement step, the measurement trajectory of the surface shape measuring device is preferably set in both the first direction and second direction, and the surface shape measuring device is preferably moved based on the measurement trajectory.

Furthermore, a pre-measurement process of measuring the shape of the surface of the metal material before the first grinding process is preferably further included, and in the second grinding condition determination process, grinding conditions for the second grinding process are preferably determined based on the shape measured in the measurement process and the shape measured in the pre-measurement process. This enables the shape before and after the first grinding process to be compared, using the shape before the first grinding process as a reference surface, thereby enabling a more accurate calculation of the presence and size of any steps.

### [Method of producing a metal product]

A method of producing a metal product according to the present disclosure is a method of grinding the surface of a metal material, which serves as a material to be ground, using the above-described grinding device. Metal products produced by the aforementioned manufacturing method have a smooth finished surface with fewer finished surface flaws. The specific production method can be the same as the grinding method described above.

### REFERENCE SIGNS LIST

- 1: Grinding device
- 2: First grinding wheel
- 3: Second grinding wheel
- 4: Robot arm
- 5: Controller
- 6: Laser rangefinder
- 7: Grinder
- 8: Grinder
- 9: Support member
- 10: Surface of metal material
- 11: Grinding range
- 12: Grinding trajectory
- 13: Grinding width
- 14: Overlapping width
- 15: Interval between strokes
- 16: Offset amount
- 17: Grinding trajectory
- 18: Grinding width
- 19: Overlap width
- 20: Working surface
- 21: TCP
- 22a, 22b: Contact surface

## Claims

1. A grinding method for grinding a surface of a material to be ground, the grinding method comprising:
a first grinding process of grinding the surface of the material to be ground along a first direction of the surface of the material to be ground; and
a second grinding process of grinding the surface of the material to be ground along a second direction intersecting the first direction after the first grinding process.

2. The grinding method according to claim 1, wherein in the second grinding process, the surface of the material to be ground is ground using an elastic grinding wheel.

3. The grinding method according to claim 2, wherein in the second grinding process, the surface of the material to be ground is ground so that a contact surface area between a working surface of the elastic grinding wheel and the surface of the material to be ground is 30 % or more of an area of the working surface.

4. The grinding method according to any one of claims 1 to 3, further comprising a measurement process and a second grinding condition determination process, wherein
in the measurement process, a shape of the surface of the material to be ground after the first grinding process is measured, and
in the second grinding condition determination process, grinding conditions for the second grinding process are determined based on the measured shape.

5. A grinding device for grinding a surface of a material to be ground, the grinding device comprising:
a first grinding member, a second grinding member, a transporter configured to move the first grinding member and the second grinding member relative to the surface of the material to be ground, and a controller configured to control the transporter, wherein
the controller is configured to control the first grinding member to move along a first direction of the surface of the material to be ground and control the second grinding member to move along a second direction intersecting the first direction.

6. The grinding device according to claim 5, wherein the transporter is a single robot arm.

7. A method of producing a metal product, comprising grinding a surface of a metal material as a material to be ground using the grinding device according to claim 5 or 6.
